# FASCICULE DE BREVET EUROPEEN

(11) **EP 1 552 776 B1**
(45) Date de publication et mention de la délivrance du brevet: **06.09.2006**
(21) Numéro de dépôt: 05356004.1
(22) Date de dépôt: 07.01.2005
(51) Int. Cl.: A47J 27/09

(54) **Appareil domestique de cuisson d'aliments sous pression pourvu d'une soupape de sécurité en élastomère**
Dampfdruckkochtopf mit Überdruckventil aus einem Elastomer
Pressure cooker provided with a security valve made of elastomeric material

(30) Priorité: 09.01.2004 FR 0400195
(43) Date de publication de la demande: 13.07.2005
(73) Titulaire: SEB S.A., 69132 Ecully Cedex (FR)
(72) Inventeur: Blanc, Hervé Eugène René, 21000 Dijon (FR); Rhetat, Eric Christian Jacques, 21000 Dijon (FR); Anota, Daniel Jean-Marie, 21000 Dijon (FR)
(74) Mandataire: Martin, Didier Roland Valéry

(56) Documents cités:
- DE-A- 2 834 397
- DE-C- 3 146 762
- GB-A- 692 949

## Description

La présente invention se rapporte au domaine technique général des appareils domestiques de cuisson d'aliments sous pression comprenant une cuve et un couvercle destiné à être verrouillé sur la cuve pour former une enceinte de cuisson sensiblement étanche, lesdits appareils étant destinés à assurer la cuisson sous pression de vapeur des aliments contenus dans la cuve.

La présente invention concerne plus particulièrement un appareil domestique de cuisson d'aliments sous pression selon le préambule de la revendication 1.

Un tel appareil est décrit dans le document GB-A-692949.

Les appareils domestiques de cuisson d'aliments sous pression sont généralement pourvus d'un dispositif de régulation de la pression, du genre soupape de régulation, qui maintient un niveau pré-établi de pression à l'intérieur de l'appareil lorsque ce dernier est en fonctionnement.

Les appareils de cuisson connus comportent également un dispositif complémentaire de sécurité, précisément une soupape de sécurité destinée à garantir la sécurité des utilisateurs en limitant la surpression régnant dans l'appareil, notamment lorsque la soupape de régulation présente un dysfonctionnement.

Les soupapes de sécurité utilisées dans les appareils de l'art antérieur comprennent généralement un corps principal pourvu d'un siège, ainsi qu'un clapet, monté mobile par l'intermédiaire d'un ressort entre une position d'étanchéité et une position de fuite, le ressort étant calibré de manière à maintenir le clapet en appui contre le siège pour obturer un orifice ménagé dans le corps principal de la soupape.

Le ressort est également calibré de telle manière que lorsque la pression à l'intérieur de l'appareil dépasse une valeur-seuil, dite valeur de déclenchement, le ressort se comprime et provoque la perte du contact entre le siège et le clapet, permettant ainsi à la vapeur en excès d'être évacuée vers l'extérieur.

Dans les soupapes de sécurité connues, le clapet se présente généralement sous la forme d'une bille métallique rigide, destinée à reposer sur un siège également métallique et rigide. Or, l'étanchéité entre pièces métalliques est particulièrement difficile à réaliser, et nécessite généralement de parfaire l'état de surface de la bille métallique et du siège, de telle sorte que ces derniers soient parfaitement complémentaires et que la bille puisse venir en appui étanche sur le siège.

En outre, il s'avère qu'à l'usage, les soupapes conçues selon ce modèle n'offrent plus une étanchéité suffisante, des fuites permanentes étant susceptibles d'apparaître et ce, même à des niveaux de pression normale de fonctionnement.

Pour pallier les inconvénients mentionnés précédemment, il est connu d'interposer un joint d'étanchéité en matière souple entre les deux pièces métalliques, à savoir le clapet d'une part et le siège d'autre part, ce qui permet d'améliorer sensiblement l'étanchéité de la soupape dans le temps.

Toutefois, les soupapes de sécurité intégrant de tels joints souples souffrent d'un autre inconvénient, lié à leur coût de fabrication.

En outre, après une certaine durée d'utilisation de l'appareil, il arrive souvent que le clapet se solidarise avec le siège de la soupape, et ce en raison du dépôt progressif de calcaire ou d'aliments dans la partie fonctionnelle de la soupape de sécurité. Les matériaux métalliques généralement utilisés pour fabriquer les pièces fonctionnelles de la soupape de sécurité, à savoir le clapet et le siège, favorisent en effet la formation de ponts calcaires rigides entre les pièces.

Lorsque ce phénomène présente un stade avancé, il peut arriver que le clapet ne puisse plus se désolidariser ou se désolidarise mal du siège lorsque la pression atteint la valeur-seuil de déclenchement, empêchant ainsi, soit complètement, soit avec un temps de latence, l'ouverture de la soupape.

Le colmatage progressif de la partie fonctionnelle de la soupape de sécurité peut donc s'avérer particulièrement dangereux pour l'utilisateur, puisque la pression à l'intérieur de l'appareil est alors susceptible d'augmenter jusqu'à des niveaux anormalement élevés.

En outre, certaines soupapes de sécurité utilisées dans les appareils de l'art antérieur nécessitent l'assemblage de deux pièces distinctes destinées à être montées de part et d'autre du couvercle de l'appareil pour être ensuite assemblées.

Or, il est particulièrement recommandé, pour des raisons de sécurité évidentes, que les soupapes de sécurité fassent l'objet d'un contrôle unitaire avant leur montage sur l'appareil.

Pour les conceptions relevant de l'assemblage de deux pièces, la vérification unitaire préliminaire de la soupape de sécurité n'est alors pas suffisante, et il est souvent nécessaire de procéder à une seconde vérification après l'assemblage et le montage de la soupape sur l'appareil.

Or, le recours à une double vérification de la soupape est non seulement contraignant pour le fabricant, mais contribue également à augmenter le coût global de l'appareil.

On voit ainsi tout l'intérêt de réaliser, au sein d'un appareil domestique de cuisson sous pression, une soupape de sécurité qui, tout en relevant d'une conception simple, économique et facilement contrôlable, garantisse de la manière la plus fiable possible la sécurité des utilisateurs.

Les objets assignés à l'invention visent en conséquence à porter remède aux différents inconvénients énumérés précédemment et à proposer un nouvel appareil domestique de cuisson d'aliments sous pression pourvu d'une soupape de sécurité offrant une étanchéité parfaite dans le temps, et garantissant à l'utilisateur la sécurité d'utilisation de l'appareil à long terme.

Un autre objet de l'invention vise à proposer un nouvel appareil domestique de cuisson d'aliments sous pression pourvu d'une soupape de sécurité ne nécessitant qu'un nombre minimum de pièces pour obtenir la fonction d'étanchéité.

Un autre objet de l'invention vise à proposer un nouvel appareil domestique de cuisson d'aliments sous pression pourvu d'une soupape de sécurité dont la conception permet d'éviter les problèmes de colmatage et de solidarisation des pièces fonctionnelles entre elles.

Un autre objet de l'invention vise à proposer un nouvel appareil domestique de cuisson d'aliments sous pression pourvu d'une soupape de sécurité susceptible d'être vérifiée lors d'un unique contrôle amont, réalisé avant le montage de ladite soupape sur l'appareil.

Un autre objet de l'invention vise à proposer un nouvel appareil domestique de cuisson d'aliments sous pression pourvu d'une soupape de sécurité dont la conception permet un montage facilité sur une pièce-support, par exemple le couvercle.

Un autre objet de l'invention vise à proposer un nouvel appareil domestique de cuisson d'aliments sous pression pourvu d'une soupape de sécurité dont le calibrage est particulièrement simple et rapide.

Les objets assignés à l'invention sont atteints à l'aide d'un appareil domestique de cuisson d'aliments sous pression comportant :
- une cuve et un couvercle destinés à former une enceinte de cuisson,
- une soupape de sécurité montée sur l'appareil de manière à limiter la surpression régnant dans la cuve, ladite soupape de sécurité comprenant un corps principal, pourvu d'un siège, ainsi qu'un clapet, monté mobile au sein du corps principal et apte à occuper, sous l'effet de la pression régnant dans l'appareil, une position de fuite et une position d'étanchéité dans laquelle ledit clapet vient en appui contre le siège au niveau d'une zone de contact, obturant ainsi un orifice ménagé à travers le corps principal au niveau du siège, ledit orifice assurant la communication fluidique entre l'intérieur de l'enceinte et l'extérieur,
- un capuchon de calibrage de la soupape de sécurité, susceptible d'être monté sur le corps principal, le capuchon de calibrage et/ou le corps principal étant formés par un matériau élastomère.

D'autres particularités et avantages de l'invention apparaîtront et ressortiront plus en détails à la lecture de la description faite ci-après, en référence aux dessins annexés, donnés à titre purement illustratif et non limitatif, dans lesquels :
- La figure 1 illustre, selon une vue transversale en coupe, un mode de réalisation d'une soupape de sécurité montée sur le couvercle d'un appareil de cuisson conforme à l'invention.
- La figure 2 illustre, selon une vue transversale en coupe, un autre mode de réalisation de la soupape de sécurité conforme à l'invention.
- La figure 3 illustre, selon une vue transversale en coupe, une variante de réalisation de la soupape de sécurité conforme à l'invention.
- La figure 4 illustre, selon une vue transversale en coupe, une variante préférentielle de réalisation de la soupape de sécurité conforme à l'invention.

L'invention concerne un appareil domestique de cuisson d'aliments sous pression qui comporte une cuve (non représentée aux figures) et un couvercle destiné à être rapporté de manière sensiblement étanche sur la cuve pour former une enceinte de cuisson.

L'appareil conforme à l'invention comporte également une soupape de sécurité 2 montée sur l'appareil et préférentiellement sur le couvercle 1, de manière à limiter la surpression régnant dans la cuve, notamment lorsqu'un autre dispositif, dit de régulation, présente un dysfonctionnement tel qu'il ne peut pas limiter la pression régnant dans l'appareil à un niveau normal de fonctionnement.

La soupape de sécurité conforme à l'invention peut être montée sur tous les appareils domestiques de cuisson d'aliments sous pression connus, et par exemple les appareils dits à mâchoires, à étriers ou encore à baïonnettes ou à trou d'homme.

Selon l'invention, la soupape de sécurité 2 comporte un corps principal 3 pourvu d'un siège 4.

La soupape de sécurité conforme à l'invention comporte également un clapet 5, de préférence formé par une bille métallique, par exemple en acier inoxydable.

Le clapet 5 est avantageusement monté mobile au sein du corps principal 3, précisément au sein d'un logement 6 ménagé dans le corps principal 3.

Le clapet 5 peut ainsi occuper, sous l'effet de la pression régnant dans l'appareil, une position d'étanchéité, dans laquelle le clapet 5 vient en appui contre le siège 4 au niveau d'une zone de contact 4A, et une position de fuite correspondant à une perte du contact entre le siège 4 et le clapet 5.

Ainsi, dans sa position d'étanchéité, le clapet 5 vient obturer un orifice 7 ménagé à travers le corps principal 3 au niveau du siège 4, l'orifice 7 ayant pour fonction d'assurer la communication fluidique entre l'intérieur de l'enceinte sous pression et l'extérieur.

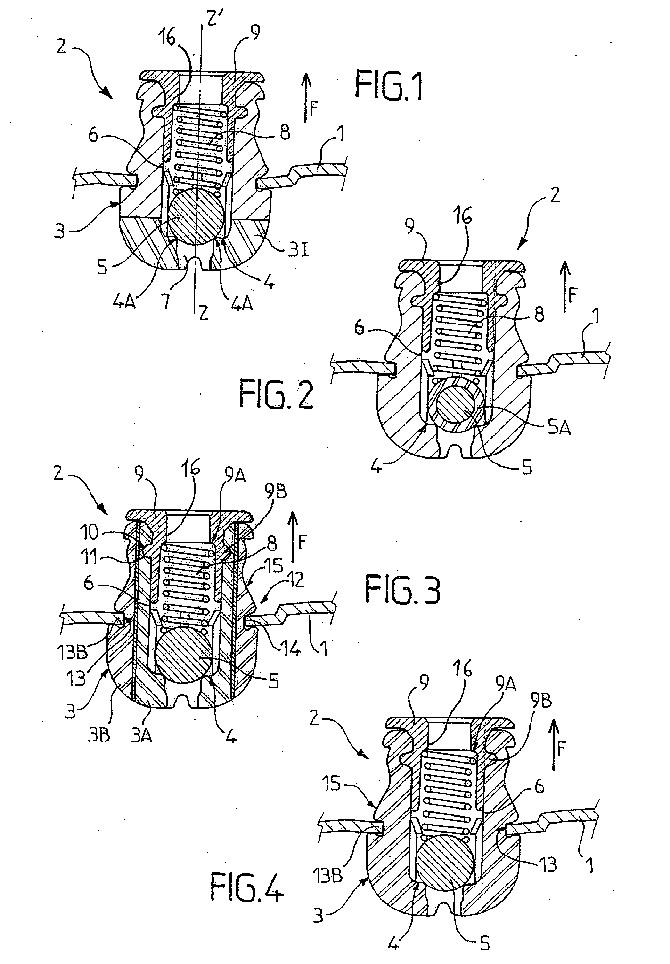

Tel que cela est représenté sur la figure 1, le clapet 5 est avantageusement monté mobile à coulissement selon un axe longitudinal Z-Z' vertical lorsque l'appareil est en position normale de fonctionnement, le clapet 5 étant susceptible de se déplacer à l'encontre d'un moyen élastique 8, de préférence un ressort, également monté au sein du logement 6.

Dans la suite de la description, le terme « *axial »* fera référence à la direction de l'axe longitudinal Z-Z', sensiblement vertical lorsque l'autocuiseur est dans sa position de fonctionnement normal.

Le ressort 8 est ainsi préférentiellement monté au sein du logement 6 de manière à pouvoir être comprimé axialement selon l'axe longitudinal Z-Z'.

Selon l'invention, le siège 4 et/ou le clapet 5 est (sont) constitué(s), au moins partiellement, dans une partie formant la zone de contact 4A, par un matériau suffisamment étanche, souple et à mémoire de forme pour que, lorsque le clapet 5 vient, dans sa position d'étanchéité, en appui contre le siège 4 au niveau de la zone de contact 4A, ledit matériau assure l'étanchéité de la soupape 2 au niveau de ladite zone de contact 4A. Ainsi, le matériau présente des propriétés de souplesse et de mémoire de forme telles qu'il peut être comprimé de manière suffisante pour assurer l'étanchéité de la soupape.

L'expression « *mémoire de forme »* fait référence au caractère élastique du matériau. Un matériau *« à mémoire de forme »* présentera ainsi, selon l'invention, un caractère élastique suffisant pour lui permettre de retrouver totalement ou sensiblement sa forme initiale de repos lorsqu'il n'est plus soumis à une contrainte externe. Il pourra s'agir d'un matériau élastomère, par exemple à base de silicone.

Grâce à sa propriété de mémoire de forme, le matériau conforme à l'invention peut ainsi reprendre sa forme initiale, non comprimée, lorsque le clapet 5 se soulève et vient dans sa position de fuite.

La conception de la soupape de sécurité conforme à l'invention permet ainsi d'assurer une bonne étanchéité par contact direct entre le clapet 5 et le siège 4, c'est-à-dire sans joint d'étanchéité intermédiaire. La fabrication de la soupape de sécurité conforme à l'invention est donc particulièrement simple et peu coûteuse.

Selon un premier mode de réalisation de l'invention, représenté sur la figure 2, le clapet 5 est formé par une bille sensiblement sphérique présentant un coeur préférentiellement métallique, par exemple en acier inoxydable, recouvert, au moins partiellement, d'une couche 5A de matériau élastomère. La couche 5A pourra ainsi se présenter sous la forme d'un anneau ou d'un tore entourant la bille au niveau de la zone de contact 4A.

Selon ce mode de réalisation, le siège 4 de la soupape de sécurité 2 est avantageusement constitué par un matériau métallique, par exemple de l'acier inoxydable, de telle sorte que la couche 5A de matériau élastomère vienne sensiblement s'écraser contre le siège 4 lorsque le clapet 5 est dans sa position d'étanchéité.

De façon encore plus préférentielle, la bille métallique formant le clapet 5 est entièrement recouverte par la couche 5A de matériau élastomère, c'est-à-dire sur toute sa surface, formant ainsi une couche 5A sphérique.

Selon un mode préférentiel de réalisation de l'invention représenté sur la figure 1, le siège 4 de la soupape de sécurité 2 est constitué par un matériau élastomère, du genre silicone. Selon ce mode de réalisation, le clapet 5 est préférentiellement formé par une bille sphérique métallique, par exemple en acier inoxydable.

Ainsi, lorsque le clapet 5 vient dans sa position d'étanchéité, le siège 4 se déforme sensiblement de manière à épouser la forme du clapet 5.

Avantageusement, et tel que cela est représenté sur la figure 1, toute la partie inférieure 31 du corps principal 3, incluant le siège 4, peut être constituée par un matériau élastomère, du genre silicone.

La conception d'une soupape de sécurité 2 selon le premier ou le second mode de réalisation permet d'éviter un colmatage progressif de la zone de contact 4A entre le clapet 5 et le siège 4. Ainsi, les matériaux souples et à mémoire de forme, notamment les matériaux élastomères, sont moins prédisposés à subir une réaction physico-chimique avec le milieu (eau, aliments...) que les matériaux métalliques, de telle sorte que le recours à de tels matériaux pour réaliser la partie fonctionnelle des soupapes de sécurité permet d'augmenter significativement la fiabilité de ces dernières dans le temps.

Selon une autre variante de réalisation de l'invention, non représentée aux figures, le siège 4 peut être constitué par un matériau élastomère, le clapet 5 étant lui-même délimité par une couche 5A de matériau élastomère. Selon cette variante, le contact étanche est réalisé entre deux matériaux souples, et non plus entre un matériau rigide, du genre métal, et un matériau souple, du genre élastomère.

De façon particulièrement avantageuse, et indépendamment des caractéristiques mentionnées précédemment, l'appareil domestique de cuisson d'aliments sous pression conforme à l'invention peut comporter un capuchon 9 de calibrage de la soupape de sécurité 2, susceptible d'être monté sur le corps principal 3 de la soupape pour refermer, au moins partiellement, le logement 6.

Le capuchon 9 de calibrage est ainsi agencé de manière à venir en appui contre le ressort 8 pour le comprimer, de telle manière que le ressort 8 d'une part assure le maintien du clapet 5 dans sa position d'étanchéité lorsque la pression régnant à l'intérieur de la cuve est inférieure à une valeur-seuil prédéterminée, et d'autre part autorise le soulèvement du clapet et son passage en position de fuite lorsque la pression à l'intérieur de la cuve dépasse la valeur-seuil prédéterminée.

Le capuchon 9 de calibrage présente ainsi avantageusement un épaulement 9A, formant butée à l'encontre du ressort 8 (figure 3).

Le capuchon 9 de calibrage est ainsi avantageusement dimensionné de telle sorte que la position de l'épaulement 9A au sein du logement 6, et en particulier sa profondeur de pénétration au sein dudit logement 6, détermine la longueur efficace du ressort 8 correspondant à un effort de résistance calculé pour garantir le contact étanche du clapet 5 sur le siège 4 tant que la pression interne de l'appareil est *« normale* », c'est-à-dire inférieure à la valeur-seuil de déclenchement de la soupape. La longueur efficace du ressort 8 est également déterminée de telle sorte lorsque la pression interne de l'appareil dépasse la valeur-seuil prédéterminée, la pression exercée par la vapeur sur la surface du clapet 5 au niveau de l'orifice 7 entraîne le soulèvement du clapet 5 et la compression du ressort 8.

L'excès de pression est alors évacué au niveau de l'espace annulaire créé entre le clapet 5, qui s'est déplacé axialement, et le siège 4 de la soupape 2.

De façon particulièrement avantageuse, le capuchon 9 de calibrage est pourvu de moyens d'ancrage 9B amovible (ou moyens de clipsage), permettant une introduction et une fixation facilitées du capuchon 9 au sein du logement 6, en exerçant une simple pression sur le capuchon 9 (figures 3 et 4).

Les moyens d'ancrage 9B permettent avantageusement le clipage du capuchon 9 sur le corps principal 3, ledit capuchon 9 constituant alors un capuchon clipsé.

A cet effet, le logement 6 est préférentiellement délimité latéralement par une enveloppe interne 3A en matériau souple, et préférentiellement en élastomère. Telle que représentée sur la figure 3, cette enveloppe interne 3A permet ainsi de faciliter l'insertion et le clipage du capuchon 9 de calibrage au sein du corps principal 3.

Bien évidemment, si le corps principal 3 de la soupape de sécurité 2 n'est pas fabriqué à partir d'un matériau élastomère, mais d'un matériau plastique ou métallique, il est également possible de réaliser le capuchon 9 de calibrage à partir d'un matériau suffisamment souple pour permettre son clipage sur le corps principal 3 de la soupape.

Un tel matériau pourra par exemple être un élastomère base silicone, et devra offrir une résistance suffisante à la poussée exercée par le ressort sur l'épaulement 9A lorsque la pression à l'intérieur de l'appareil est égale ou supérieure à la pression normale de fonctionnement. En effet, l'existence d'une telle pression à l'intérieur de la cuve ne doit pas conduire à l'expulsion du capuchon 9 de calibrage.

Les moyens d'ancrage 9B sont avantageusement formés par un rebord 10 périphérique externe disposé sur le capuchon 9 et destiné à coopérer avec une entaille 11 correspondante ménagée dans l'enveloppe interne 3A du logement 6 (figure 3), de telle sorte que le rebord 10 vienne se loger à l'intérieur de l'entaille 11, immobilisant ainsi le capuchon 9 de calibrage au sein du corps principal 3 de la soupape de sécurité 2.

Le capuchon 9 de calibrage est préférentiellement pourvu d'un orifice d'échappement 16 autorisant la fuite de la vapeur contenue dans l'enceinte de cuisson lorsque le clapet 5 est en position haute.

Avantageusement et indépendamment des caractéristiques précédemment décrites, le corps principal 3 de la soupape 2 comporte également une enveloppe externe 3B constituée par un matériau souple et à mémoire de forme, par exemple un matériau élastomère à base silicone (figure 3).

Le corps principal 3 de la soupape 2 est alors avantageusement pourvu de moyens de fixation 12 permettant son clipage au sein d'une lumière 13, ménagée dans une pièce-support, par exemple le couvercle 1.

Ainsi, grâce notamment à la souplesse de l'enveloppe externe 3B, la soupape 2, et en particulier le corps principal 3 de la soupape peut être introduit au sein de la lumière 13 à l'aide d'une simple poussée exercée suivant la direction de la flèche F représentée sur la figure 3.

De façon préférentielle, les moyens de fixation 12 sont formés par une rainure périphérique 14 agencée et disposée sur le corps principal 3, de telle sorte que le bord 13B délimitant la lumière 13 puisse venir en appui sensiblement étanche à l'intérieur de la rainure 14. Afin de faciliter l'introduction du corps principal 3 à l'intérieur de la lumière 13, ce dernier comporte avantageusement une zone d'engagement 15 sensiblement tronconique.

Selon un mode de réalisation encore plus préférentielle de l'invention représenté sur la figure 4, le corps principal 3 de la soupape de sécurité 2 est sensiblement entièrement formé par un matériau élastomère, par exemple à base de silicone.

Cette conception de la soupape de sécurité 2 permet ainsi de lui conférer une structure suffisamment souple pour permettre, d'une part son montage étanche au sein de la lumière 13 et d'autre part, le montage par clipage du capuchon 9 de calibrage au sein du logement 6.

Les propriétés de souplesse et de mémoire de forme du corps principal 3 de la soupape 2 permettent également d'assurer l'étanchéité dans la zone de contact 4A entre le clapet 5 et le siège 4 de soupape.

L'appareil domestique de cuisson pourvu de la soupape de sécurité 2 conforme à l'invention présente ainsi une conception telle que la soupape de sécurité 2 forme un sous-ensemble unitaire dont l'enveloppe externe 3B en élastomère permet un montage simple, rapide et étanche notamment sur le couvercle 1 de l'appareil.

En outre, il est possible d'adapter le niveau de pression de déclenchement de la soupape de sécurité 2 à chaque type d'appareil, et ce en changeant uniquement le capuchon 9 de calibrage dont la géométrie et le dimensionnement permettent de tarer le ressort 8. Le capuchon 9 de calibrage pourra ainsi être décliné dans plusieurs géométries correspondant chacune à une longueur donnée du ressort 8.

De façon particulièrement avantageuse, une couleur de capuchon 9 pourra être associée à une géométrie donnée de manière à faciliter la sélection dudit capuchon.

La conception de la soupape de sécurité 2, qui se présente sous la forme d'un sous-ensemble unitaire, permet également de faciliter les contrôles amont de fiabilité du dispositif, les valeurs mesurées en amont, c'est-à-dire lorsque la soupape n'est pas montée sur l'appareil, restant valables lorsque cette dernière est montée sur sa pièce-support, par exemple sur le couvercle.

Le choix des matériaux utilisés et notamment le recours à des matériaux élastomères pour fabriquer le corps principal 3 de la soupape 2 permet de garantir la fiabilité du dispositif de sécurité dans le temps en limitant son vieillissement, notamment en réduisant le colmatage.

En outre, la conception de la soupape de sécurité en tant que telle est simple, et met en oeuvre peu de composants pour obtenir la fonction d'étanchéité, de telle sorte que la fabrication d'une telle soupape est particulièrement économique.

Le mode de fonctionnement de l'appareil domestique de cuisson d'aliments sous pression conforme à l'invention va maintenant être décrit en regard des figures 1 à 4.

Pour utiliser l'appareil de cuisson conforme à l'invention, l'utilisateur doit tout d'abord verrouiller le couvercle 1 sur la cuve, par exemple à l'aide de moyens de verrouillage bien connus de l'homme du métier et non représentés aux figures, l'étanchéité de l'appareil étant avantageusement réalisée à l'aide d'un joint d'étanchéité, de préférence interposé entre le couvercle 1 et la cuve.

La soupape de sécurité 2 conforme à l'invention est préférentiellement montée sur le couvercle 1, mais peut être montée sur une autre pièce de l'appareil, par exemple la cuve ou encore une pièce indépendante montée sur le couvercle 1. L'appareil comporte avantageusement une autre soupape, dite de régulation, laquelle régule la pression à l'intérieur de l'appareil lorsque ce dernier fonctionne normalement. La soupape de sécurité 2 conforme à l'invention ne fonctionne en revanche qu'en cas de dysfonctionnement de la soupape de régulation, c'est-à-dire lorsque la pression à l'intérieur de l'appareil dépasse une valeur-seuil prédéterminée supérieure à la valeur de la pression normale de fonctionnement.

Ainsi, tant que la pression à l'intérieur de l'appareil reste inférieure ou égale à la pression normale de fonctionnement, le clapet 5 de la soupape de sécurité 2 est dans sa position dite d'étanchéité, c'est-à-dire qu'il vient en appui étanche contre le siège 4 de la soupape.

Grâce à l'utilisation de matériaux souples et à mémoire de forme, notamment des matériaux élastomères, au niveau de la zone de contact 4A entre le clapet 5 et le siège 4, l'étanchéité de la soupape est parfaitement assurée.

Si un dysfonctionnement, tel que la soupape de régulation n'est plus en mesure de maintenir la pression à l'intérieur de l'appareil en deçà de la valeur nominale, se produit, et si la pression à l'intérieur de l'enceinte de l'appareil dépasse la valeur-seuil prédéterminée, la soupape de sécurité 2 se déclenche.

Ainsi, lorsque la pression à l'intérieur de l'enceinte dépasse ladite valeur-seuil prédéterminée, la résultante des forces exercées sur le clapet 5 conduit ce dernier à s'écarter sensiblement du siège 4, autorisant alors la fuite de l'excès de vapeur contenue dans l'enceinte.

Ainsi, le clapet 5, par exemple une bille métallique, transmet l'effort exercé par les forces de pression sur une partie de sa surface au ressort, qui se comprime davantage et autorise la bille à quitter son appui étanche.

La pression à l'intérieur de l'autocuiseur est limitée à la pression de déclenchement prévue et peut éventuellement décroître, auquel cas l'effort exercé par le ressort 8 sur le clapet 5 redevient supérieur à l'effort résultant des forces de pression exercées sur ledit clapet, et ce dernier retrouve sa position d'étanchéité, dans laquelle il vient en appui étanche contre le siège 4 de la soupape 2.

Grâce à l'utilisation d'un matériau à mémoire de forme au niveau de la zone de contact 4A, la contrainte exercée par le clapet 5, dans sa position d'étanchéité, sur la zone de contact 4A ne conduit pas à une déformation permanente du matériau dans cette zone, ce dernier recouvrant sa forme initiale dès lors qu'aucune contrainte n'est exercée sur sa surface.

## Revendications

1. Appareil domestique de cuisson d'aliments sous pression comportant :
- une cuve et un couvercle (1) destinés à former une enceinte de cuisson,
- une soupape de sécurité (2), montée sur l'appareil de manière à limiter la surpression régnant dans la cuve, ladite soupape de sécurité (2) comprenant un corps principal (3), pourvu d'un siège (4), ainsi qu'un clapet (5), monté mobile au sein du corps principal (3) et apte à occuper, sous l'effet de la pression régnant dans l'appareil, une position de fuite et une position d'étanchéité dans laquelle ledit clapet (5) vient en appui contre le siège (4) au niveau d'une zone de contact (4A), obturant ainsi un orifice (7) ménagé à travers le corps principal (3) au niveau du siège (4), ledit orifice (7) assurant la communication fluidique entre l'intérieur de l'enceinte et l'extérieur,
- un capuchon (9) de calibrage de la soupape de sécurité (2), susceptible d'être monté sur le corps principal (3), **caractérisé en ce que** le capuchon (9) de calibrage et/ou le corps principal (3) sont formés par un matériau élastomère.

2. Appareil selon la revendication 1 **caractérisé en ce que** le clapet (5) est susceptible de se déplacer à l'encontre d'un moyen élastique (8), le capuchon (9) de calibrage étant agencé de manière à venir en appui contre le moyen élastique (8) pour le comprimer.

3. Appareil selon la revendication 1 ou 2 **caractérisé en ce que** le capuchon (9) de calibrage est pourvu de moyens d'ancrage (9B) amovible, permettant la fixation du capuchon (9) au sein du corps principal (3) en exerçant une simple pression sur le capuchon (9).

4. Appareil selon la revendication 3 **caractérisé en ce qu**'un logement (6) est ménagé dans le corps principal (3), ledit logement (6) étant délimité latéralement par une enveloppe interne (3A), et en ce que les moyens d'ancrage (9B) sont formés par un rebord (10) périphérique externe, disposé sur le capuchon (9), et destiné à coopérer avec une entaille (11) correspondante ménagée dans l'enveloppe interne (3A) de telle sorte que ledit rebord (10) vienne se loger à l'intérieur de ladite entaille (11).

5. Appareil selon l'une des revendications 1 à 4 **caractérisé en ce que** le corps principal (3) de la soupape (2) comporte une enveloppe externe (3B) en matériau élastomère.

6. Appareil selon la revendication 5 **caractérisé en ce que** le corps principal (3) de la soupape (2) est pourvu de moyens de fixation (12) permettant son clipage au sein d'une lumière (13) ménagée dans une pièce-support, du genre couvercle.

7. Appareil selon la revendication 6 **caractérisé en ce que** les moyens de fixation (12) sont formés par une rainure (14) périphérique agencée de telle sorte que le bord (13B) délimitant la lumière (13) puisse venir en appui sensiblement étanche à l'intérieur de la rainure (14).

8. Appareil selon la revendication 6 ou 7 **caractérisé en ce que** le corps principal (3) de la soupape (2) comporte une zone d'engagement (15) sensiblement tronconique, destinée à faciliter l'introduction de la soupape (2) au sein de la lumière (13).

9. Appareil selon l'une des revendications 1 à 8 **caractérisé en ce que** le clapet (5) est formé par une bille recouverte, au moins partiellement, d'une couche (5A) de matériau élastomère.

## Claims

1. Domestic appliance for cooking food under pressure comprising:
- a container and a lid (1) intended to form a cooking vessel;
- a safety valve (2), mounted on the appliance so as to limit the excess pressure prevailing in the container, said safety valve (2) comprising a main body (3), provided with a seat (4), and a valve piece (5), mounted able to move within the main body (3) and capable of occupying, under the effect of the pressure prevailing in the appliance, a leakage position and a sealing position in which said valve piece (5) comes to rest against the seat (4) at a contact area (4A) thus closing off an aperture (7) made through the main body (3) at the level of the seat (4), said aperture (7) providing fluidic communication between the inside of the vessel and the outside;
- a cap (9) for calibrating the safety valve (2), able to be mounted on the main body (3), **characterised in that** the calibration cap (9) and/or the main body (3) are formed by an elastomer material.

2. Appliance according to Claim 1, **characterised in that** the valve piece (5) is able to move against an elastic means (8), the calibration cap (9) being arranged so as to come to rest against the elastic means (8) in order to compress it.

3. Appliance according to Claim 1 or 2, **characterised in that** the calibration cap (9) is provided with removable anchoring means (9B), allowing fixing of the cap (9) within the main body (3) simply by exerting pressure on the cap (9).

4. Appliance according to Claim 3, **characterised in that** a housing (6) is made in the main body (3), said housing (6) being delimited laterally by an internal casing (3A), and **in that** the anchoring means (9B) are formed by an external peripheral rim (10), disposed on the cap (9), and intended to cooperate with a corresponding notch (11) made in the internal casing (3A) so that said rim (10) comes to lodge inside said notch (11).

5. Appliance according to one of Claims 1 to 4, **characterised in that** the main body (3) of the valve (2) comprises an external casing (3B) made of elastomer material.

6. Appliance according to Claim 5, **characterised in that** the main body (3) of the valve (2) is provided with fixing means (12) allowing it to be clipped within an opening (13) made in a part support, of the lid kind.

7. Appliance according to Claim 6, **characterised in that** the fixing means (12) are formed by a peripheral groove (14) arranged so that the edge (13B) delimiting the opening (13) can come to rest substantially sealed inside the groove (14).

8. Appliance according to Claim 6 or 7, **characterised in that** the main body (3) of the valve (2) comprises a substantially tapered insertion area (15), intended to facilitate the introduction of the valve (2) within the opening (13).

9. Appliance according to one of Claims 1 to 8, **characterised in that** the valve piece (5) is formed by a ball, covered, at least partially, with a layer (5A) of elastomer material.

## Patentansprüche

1. Haushaltsgerät zum Kochen von Lebensmitteln unter Druck, welches umfasst:
- ein Gefäß und einen Deckel (1), die dazu bestimmt sind, einen Kochraum zu bilden,
- ein Sicherheitsventil (2), das an dem Gerät angebracht ist, derart, dass es den in dem Gefäß herrschenden Überdruck begrenzt, wobei das Sicherheitsventil (2) einen Hauptkörper (3), der mit einem Sitz (4) versehen ist, sowie eine Ventilklappe (5) umfasst, die beweglich im Inneren des Hauptkörpers (3) angebracht ist und in der Lage ist, unter der Einwirkung des in dem Gerät herrschenden Druckes eine Ablassposition und eine Dichtigkeitsposition, in welcher die Ventilklappe (5) an dem Sitz (4) im Bereich einer Kontaktzone (4A) zum Anliegen kommt und so eine Öffnung (7) verschließt, die im Bereich des Sitzes (4) durch den Hauptkörper (3) hindurch angebracht ist, einzunehmen, wobei die Öffnung (7) die Fließverbindung zwischen dem Inneren des Raumes und dem Äußeren sicherstellt,
- eine Kappe (9) zum Kalibrieren des Sicherheitsventils (2), die auf dem Hauptkörper (3) angebracht werden kann, **dadurch gekennzeichnet, dass** die Kalibrierkappe (9) und/oder der Hauptkörper (3) aus einem elastomeren Werkstoff hergestellt sind.

2. Gerät nach Anspruch 1, **dadurch gekennzeichnet, dass** die Ventilklappe (5) in der Lage ist, sich entgegen der wirkung eines elastischen Mittels (8) zu bewegen, wobei die Kalibrierkappe (9) so gestaltet ist, dass sie sich auf das elastische Mittel (8) stützt, um es zusammenzudrücken.

3. Gerät nach Anspruch 1 oder 2, **dadurch gekennzeichnet, dass** die Kalibrierkappe (9) mit abnehmbaren Verankerungsmitteln (9B) versehen ist, welche die Befestigung der Kappe (9) im Inneren des Hauptkörpers (3) ermöglichen, indem ein einfacher Druck auf die Kappe (9) ausgeübt wird.

4. Gerät nach Anspruch 3, **dadurch gekennzeichnet, dass** in dem Hauptkörper (3) eine Aufnahme (6) angebracht ist, wobei die Aufnahme (6) seitlich durch eine innere Umhüllung (3A) begrenzt wird, und **dadurch**, dass die Verankerungsmittel (9B) durch einen äußeren, entlang des Umfangs verlaufenden Ansatz (10) gebildet sind, der an der Kappe (9) angeordnet ist und dazu bestimmt ist, mit einer entsprechenden Einkerbung (11) zusammenzuwirken, die in der inneren Umhüllung (3A) angebracht ist, derart, dass der Ansatz (10) im Inneren der Einkerbung (11) aufgenommen wird.

5. Gerät nach einem der Ansprüche 1 bis 4, **dadurch gekennzeichnet, dass** der Hauptkörper (3) des Ventils (2) eine äußere Umhüllung (3B) aus einem elastomeren Werkstoff umfasst.

6. Gerät nach Anspruch 5, **dadurch gekennzeichnet, dass** der Hauptkörper (3) des Ventils (2) mit Befestigungsmitteln (12) versehen ist, die sein Festklipsen im Inneren einer Öffnung (13) ermöglichen, die in einem Halteteil von der Art eines Deckels angebracht ist.

7. Gerät nach Anspruch 6, **dadurch gekennzeichnet, dass** die Befestigungsmittel (12) von einer entlang des Umfangs verlaufenden Nut (14) gebildet sind, die so gestaltet ist, dass der die Öffnung (13) begrenzende Rand (13B) im Inneren der Nut (14) im Wesentlichen dicht zum Anliegen kommen kann.

8. Gerät nach Anspruch 6 oder 7, **dadurch gekennzeichnet, dass** der Hauptkörper (3) des Ventils (2) einen im Wesentlichen kegelstumpfförmigen Eingriffsbereich (15) umfasst, der dazu bestimmt ist, die Einführung des Ventils (2) in das Innere der Öffnung (13) zu erleichtern.

9. Gerät nach einem der Ansprüche 1 bis 8, **dadurch gekennzeichnet, dass** die Ventilklappe (5) von einer Kugel gebildet ist, die wenigstens teilweise von einer Schicht (5A) aus einem elastomeren Werkstoff bedeckt ist.
